(19) Europäisches Patentamt
European Patent Office
Office européen des brevets

(11) EP 4 261 237 A1

(12) EUROPEAN PATENT APPLICATION
published in accordance with Art. 153(4) EPC

(43) Date of publication:
**18.10.2023 Bulletin 2023/42**

(21) Application number: **21903740.5**

(22) Date of filing: **02.12.2021**

(51) International Patent Classification (IPC):
***C08F 210/16** (2006.01)* ***C08F 210/14** (2006.01)*
***C08F 2/34** (2006.01)* ***C08F 4/659** (2006.01)*
***C08F 4/6592** (2006.01)* ***C08F 4/02** (2006.01)*

(52) Cooperative Patent Classification (CPC):
**C08F 2/34; C08F 4/02; C08F 4/659; C08F 4/6592; C08F 210/14; C08F 210/16**

(86) International application number:
**PCT/KR2021/018076**

(87) International publication number:
**WO 2022/124694 (16.06.2022 Gazette 2022/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.12.2020 KR 20200170312**

(71) Applicant: **Hanwha Solutions Corporation**
**Jung-gu**
**Seoul 04541 (KR)**

(72) Inventors:
- **JO, Jisong**
  **Daejeon 34128 (KR)**
- **PARK, Jeong Hyun**
  **Daejeon 34128 (KR)**
- **KIM, Sung Dong**
  **Daejeon 34128 (KR)**
- **LEE, Munhee**
  **Daejeon 34128 (KR)**
- **JOUNG, Ui Gap**
  **Daejeon 34128 (KR)**

(74) Representative: **Berggren Oy**
**P.O. Box 16**
**Eteläinen Rautatiekatu 10A**
**00101 Helsinki (FI)**

# (54) OLEFIN-BASED POLYMER, FILM PREPARED THEREFROM, AND PREPARATION METHODS THEREFOR

(57) The present invention relates to an olefin-based polymer, a film prepared therefrom, and preparation methods therefor. An olefin-based polymer according to an implementation of the present invention has excellent processability, and a film prepared therefrom, particularly, a linear low density polyethylene film has excellent mechanical strength, in particular, drop impact strength.

[FIG. 1]

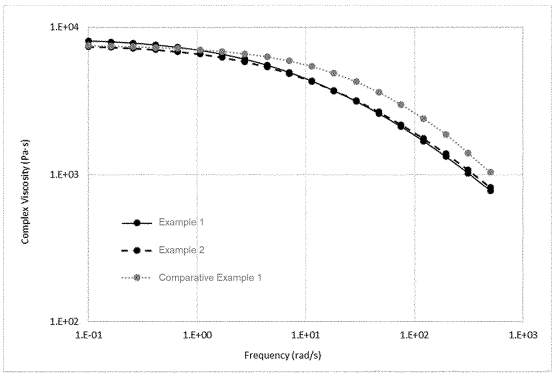


EP 4 261 237 A1

## Description

[Technical Field]

The present invention relates to an olefin-based polymer, a film prepared therefrom, and methods for preparing the same. Specifically, the present invention relates to an olefin-based polymer having excellent processability, an olefin-based polymer film which is prepared therefrom and has excellent mechanical strength, in particular, excellent drop impact strength, and methods for preparing the same.

[Background Art]

A metallocene catalyst which is one of the catalysts used in olefin polymerization, which is a compound in which a ligand such as cyclopentadienyl, indenyl, or cycloheptadienyl is coordinated to a transition metal or a transition metal halogen compound, has a sandwich structure as a basic form.

A Ziegler-Natta catalyst which is another catalyst used for polymerizing olefins has heterogeneous properties of an active site, since a metal component as an active site is dispersed on an inert solid surface; however, the metallocene catalyst is known as a single-site catalyst having identical polymerization properties in all active sites, since it is one compound having a certain structure. A polymer polymerized with the metallocene catalyst as such has a narrow molecular weight distribution, a uniform comonomer distribution, and copolymerization activity higher than the Ziegler Natta catalyst.

Meanwhile, a linear low-density polyethylene (LLDPE) is prepared by copolymerizing ethylene and $\alpha$-olefin at a low pressure using a polymerization catalyst, has a narrow molecular weight distribution and a short chain branch (SCB) having a certain length, and does not have a long chain branch (LCB) in general. A film prepared with a linear low-density polyethylene has high breaking strength and elongation, and excellent tear strength, impact strength, and the like, together with general properties of polyethylene, and thus, is widely used in a stretch film, an overlap film, and the like to which it is conventionally difficult to apply low-density polyethylene or high-density polyethylene.

However, a linear low-density polyethylene prepared by a metallocene catalyst tends to have poor processability due to a narrow molecular weight distribution.

Therefore, an olefin-based polymer which allows preparation of a film having excellent mechanical strength, in particular, excellent drop impact strength while having excellent processability is being demanded.

[Disclosure]

[Technical Problem]

An object of the present invention is to provide an olefin-based polymer which allows preparation of an olefin-based polymer film having excellent mechanical strength, in particular, excellent drop impact strength while having excellent processability.

Another object of the present invention is to provide an olefin-based polymer film which is prepared from the olefin-based polymer and has excellent mechanical strength, in particular, drop impact strength.

Still another object of the present invention is to provide methods for preparing the olefin-based polymer and the olefin-based polymer film.

[Technical Solution]

In one general aspect, an olefin-based polymer which has (1) a density of 0.9 to 0.95 g/cm$^3$; (2) a melt index ($I_{2.16}$) of 0.1 to 5.0 g/10 min as measured with a load of 2.16 kg at 190°C; (3) a ratio between a melt index ($I_{21.6}$) measured with a load of 21.6 kg and a melt index ($I_{2.16}$) measured with a load of 2.16 kg at 190°C (melt flow ratio; MFR) of 20 or more; (4) a shear thinning index defined by the following Equation 1 of 8 to 15; and (5) an extrusion load (torque) of 270 Nm or less at an extrusion amount of 5.8 to 5.9 kg/hr, wherein a film prepared therefrom has a drop impact strength (type B) of 700 g or more, preferably 700 to 2,000 g, based on a thickness of 50 $\mu$m, is provided.

[Equation 1]

$$\text{Shear thinning index} = \eta_0/\eta_{500}$$

wherein $\eta_0$ and $\eta_{500}$ are complex viscosities at frequencies of 0.1 rad/s and 500 rad/s.

In a specific example of the present invention, the olefin-based polymer may have (1) the density of 0.915 to 0.945 g/cm$^3$; (2) the melt index ($I_{2.16}$) of 0.1 to 5.0 g/10 min as measured with a load of 2.16 kg at 190°C; (3) the ratio between a melt index ($I_{21.6}$) measured with a load of 21.6 kg and a melt index ($I_{2.16}$) measured with a load of 2.16 kg at 190°C (melt flow ratio; MFR) of 20 or more; (4) the shear thinning index defined by Equation 1 of 9 to 15; and (5) the extrusion load (torque) of 260 Nm or less at an extrusion amount of 5.8 to 5.9 kg/hr, wherein a film prepared therefrom has a drop impact strength (type B) of 700 g or more, based on a thickness of 50 $\mu$m.

In a preferred specific example of the present invention, the olefin-based polymer may have (1) the density of 0.915 to 0.942 g/cm$^3$; (2) the melt index ($I_{2.16}$) of 0.5 to 3.5 g/10 min as measured with a load of 2.16 kg at 190°C; (3) the MFR of 20 to 50; (4) the shear thinning index defined by Equation 1 of 9 to 12; and (5) the extrusion load of 200 to 255 Nm at an extrusion amount of 5.8 to 5.9 kg/hr.

In a specific example of the present invention, the olefin-based polymer may be prepared by polymerizing an olefin-based monomer in the presence of a hybrid catalyst including: at least one first transition metal compound represented by the following Chemical Formula 1; and at least one second transition metal compound selected from a compound represented by the following Chemical Formula 2 and a compound represented by the following Chemical Formula 3:

[Chemical Formula 1]

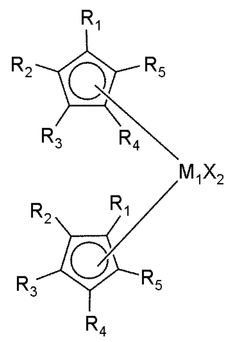

[Chemical Formula 2]

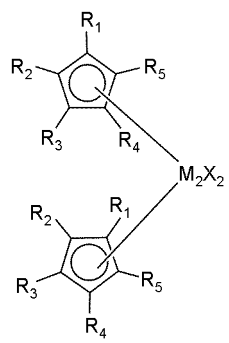

[Chemical Formula 3]

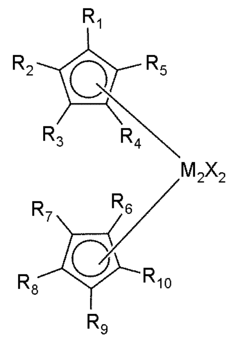

wherein $M_1$ and $M_2$ are different from each other and independently of each other titanium (Ti), zirconium (Zr), or hafnium (Hf),
X is independently of each other halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, or C1-20 alkylamido, and
$R_1$ to $R_{10}$ are independently of one another hydrogen, substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, substituted or unsubstituted $C_{1-20}$ alkylidene, or substituted or unsubstituted $C_{1-20}$ silyl, provide that $R^1$ to $R^{10}$ may be independently of each other connected to an adjacent group to form a substituted or unsubstituted saturated or unsaturated $C_{4-20}$ ring.

In a specific example of the present invention, $M_1$ and $M_2$ may be different from each other and be zirconium or hafnium, respectively, X may be halogen or $C_{1-20}$ alkyl, respectively, and $R_1$ to $R_{10}$ may be hydrogen, substituted or unsubstituted $C_{1-20}$ alkyl, substituted or unsubstituted $C_{1-20}$ alkenyl, or substituted or unsubstituted $C_{6-20}$ aryl, respectively.

In a preferred specific example of the present invention, $M_1$ may be hafnium, $M_2$ may be zirconium, and X may be chlorine or methyl.

In a preferred specific example of the present invention, the first transition metal compound may be at least one of transition metal compounds represented by the following Chemical Formulae 1-1 and 1-2, and the second transition metal compound may be at least one of transition metal compounds represented by the following Chemical Formulae 2-1, 2-2, and 3-1:

[Chemical Formula 1-1] [Chemical Formula 1-2]

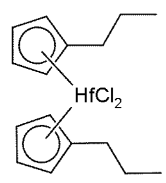

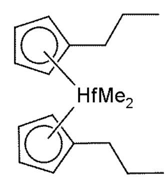

[Chemical Formula 2-1] [Chemical Formula 2-2]

[Chemical Formula 3-1]

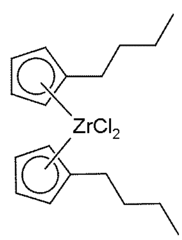

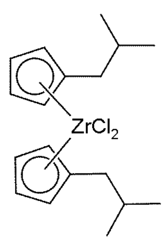

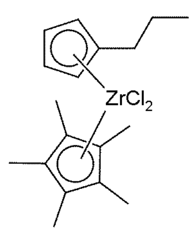

wherein Me is a methyl group.

In a specific example of the present invention, a mole ratio of the first transition metal compound to the second transition metal compound is in a range of 100:1 to 1:100.

In a specific example of the present invention, the catalyst may include at least one cocatalyst selected from the group consisting of a compound represented by the following Chemical Formula 4, a compound represented by the following Chemical Formula 5, and a compound represented by the following Chemical Formula 6:

[Chemical Formula 4]

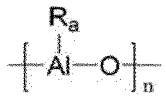

[Chemical Formula 5]

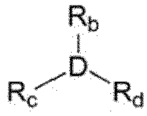

[Chemical Formula 6] $[L-H]^+[Z(A)_4]^-$ or $[L]^+[Z(A)_4]^-$

wherein n is an integer of 2 or more, $R_a$ is a halogen atom, a $C_{1-20}$ hydrocarbon group, or a $C_{1-20}$ hydrocarbon group substituted with halogen,

D is aluminum (Al) or boron (B), and $R_b$, $R_c$, and $R_d$ are independently of one another a halogen atom, a $C_{1-20}$ hydrocarbon group, a $C_{1-20}$ hydrocarbon group substituted with halogen, or a $C_{1-20}$ alkoxy group, and

L is a neutral or cationic Lewis base, $[L-H]^+$ and $[L]^+$ are a Bronsted acid, Z is a group 13 element, and A is independently of each other a substituted or unsubstituted $C_{6-20}$ aryl group or a substituted or unsubstituted $C_{1-20}$ alkyl group.

In a specific example of the present invention, the catalyst may further include a carrier which supports a transition metal compound, a cocatalyst compound, or both of them.

In a preferred specific example of the present invention, the carrier may include at least one selected from the group consisting of silica, alumina, and magnesia.

Here, a total amount of the hybrid transition metal compound supported on the carrier may be 0.001 to 1 mmole based on 1 g of the carrier, and a total amount of the cocatalyst compound supported on the carrier may be 2 to 15 mmole based on 1 g of the carrier.

In a specific example of the present invention, the olefin-based polymer may be a copolymer of an olefin-based monomer and an olefin-based comonomer. Specifically, the olefin-based monomer may be ethylene, and the olefin-based comonomer may be at least one selected from the group consisting of propylene, 1-butene, 1-pentene, 4-methyl-1-pentene, 1-hexene, 1-heptene, 1-octene, 1-decene, 1-undecene, 1-dodecene, 1-tetradecene, and 1-hexadecene. Preferably, the olefin-based polymer may be a linear low-density polyethylene in which the olefin-based monomer is ethylene and the olefin-based comonomer is 1-hexene.

In another general aspect, a method for preparing an olefin-based polymer includes: polymerizing an olefin-based monomer in the presence of a hybrid catalyst including at least one first transition metal compound represented by Chemical Formula 1; and at least one second transition metal compound selected from the compound represented by Chemical Formula 2 and the compound represented by Chemical Formula 3, thereby obtaining an olefin-based polymer, wherein the olefin-based polymer has (1) a density of 0.9 to 0.95 g/cm$^3$, preferably 0.91 to 0.945 g/cm$^3$; (2) a melt index ($I_{2.16}$) of 0.1 to 5.0 g/10 min, preferably 0.3 to 4.0 g/10 min as measured with a load of 2.16 kg at 190°C; (3) a ratio between a melt index ($I_{21.6}$) measured with a load of 21.6 kg and a melt index ($I_{2.16}$) measured with a load of 2.16 kg at 190°C (melt flow ratio; MFR) of 20 or more, preferably 22 or more; (4) a shear thinning index defined by Equation 1 of 8 to 15, preferably 9 to 15; and (5) an extrusion load (torque) of 270 Nm or less, preferably 260 Nm or less at an extrusion amount of 5.8 to 5.9 kg/hr, wherein a film prepared therefrom has a drop impact strength (type B) of 700 g or more, preferably 700 to 2,000 g based on a thickness of 50 $\mu$m.

In a specific example of the present invention, polymerization of the olefin-based monomer may be performed

by gas phase polymerization, and specifically, the polymerization of the olefin-based monomer may be performed in a gas phase fluidized bed reactor.

[Advantageous Effects]

An olefin-based polymer according to an embodiment of the present invention has excellent processability, and a film prepared therefrom, particularly, a linear low-density polyethylene film has excellent mechanical strength, in particular, excellent drop impact strength.

[Description of Drawings]

FIG. 1 is a graph showing complex viscosity depending on a frequency of olefin-based polymers of Examples 1 and 2 and Comparative Example 1.

FIG. 2 is a graph showing an extrusion load (torque) depending on an extrusion amount of olefin-based polymers of Examples 1 and 2 and Comparative Example 1.

[Best Mode]

Hereinafter, the present invention will be described in more detail.

**Olefin-based polymer**

According to an exemplary embodiment of the present invention, an olefin-based polymer which has (1) a density of 0.9 to 0.95 g/cm$^3$; (2) a melt index ($I_{2.16}$) of 0.1 to 5.0 g/10 min as measured with a load of 2.16 kg at 190°C; (3) a ratio between a melt index ($I_{21.6}$) measured with a load of 21.6 kg and a melt index ($I_{2.16}$) measured with a load of 2.16 kg at 190°C (melt flow ratio; MFR) of 20 or more; (4) a shear thinning index defined by Equation 1 of 8 to 15; and (5) an extrusion load (torque) of 270 Nm or less at an extrusion amount of 5.8 to 5.9 kg/hr, wherein a film prepared therefrom has a drop impact strength (type B) of 700 g or more, preferably 700 to 2,000 g, based on a thickness of 50 $\mu$m, is provided.

In a specific example of the present invention, the olefin-based polymer may have (1) the density of 0.915 to 0.945 g/cm$^3$; (2) the melt index ($I_{2.16}$) of 0.1 to 5.0 g/10 min as measured with a load of 2.16 kg at 190°C; (3) the ratio between a melt index ($I_{21.6}$) measured with a load of 21.6 kg and a melt index ($I_{2.16}$) measured with a load of 2.16 kg at 190°C (melt flow ratio; MFR) of 20 or more; (4) the shear thinning index defined by Equation 1 of 9 to 15; and (5) the extrusion load (torque) of 260 Nm or less at an extrusion amount of 5.8 to 5.9 kg/hr, wherein a film prepared therefrom has a drop impact strength (type B) of 700 g or more, based on a thickness of 50 $\mu$m.

In a preferred specific example of the present invention, the olefin-based polymer may have (1) the density of 0.915 to 0.942 g/cm$^3$; (2) the melt index ($I_{2.16}$) of 0.5 to 3.5 g/10 min as measured with a load of 2.16 kg at 190°C; (3) the MFR of 20 to 50; (4) the shear thinning index defined by Equation 1 of 9 to 12; and (5) the extrusion load of 200 to 255 Nm at an extrusion amount of 5.8 to 5.9 kg/hr.

In a specific example of the present invention, the olefin-based polymer has the density of 0.9 to 0.95 g/cm$^3$. Preferably, the olefin-based polymer may have a density of 0.91 to 0.945 g/cm$^3$, 0.915 to 0.945 g/cm$^3$, 0.91 to 0.93 g/cm$^3$, 0.915 to 0.942 g/cm$^3$, or 0.915 to 0.925 g/cm$^3$.

In a specific example of the present invention, the olefin-based polymer may have the melt index ($I_{2.16}$) of 0.1 to 5.0 g/10 min as measured with a load of 2.16 kg at 190°C. Preferably, the melt index of the olefin-based polymer measured with a load of 2.16 kg at 190°C may be 0.3 to 4.0 g/10 min, 0.5 to 3.5 g/10 min, or 0.5 to 3.0 g/10 min.

In a specific example of the present invention, the olefin-based polymer may have the ratio between a melt index ($I_{21.6}$) measured with a load of 21.6 kg and a melt index ($I_{2.16}$) measured with a load of 2.16 kg at 190°C (melt flow ratio; MFR) of 20 or more. Preferably, the olefin-based polymer may have the MFR of 22 or more or 20 to 50.

In a specific example of the present invention, the olefin-based polymer may have the shear thinning index defined by the following Equation 1 of 8 to 15. Preferably, the olefin-based polymer may have the shear thinning index of 9 to 15 or 9 to 12:

[Equation 1]

$$\text{Shear thinning index} = \eta_0/\eta_{500}$$

wherein $\eta_0$ and $\eta_{500}$ are complex viscosities at frequencies of 0.1 rad/s and 500 rad/s.

A polymer has intermediate properties between a completely elastic material and a viscous liquid, which is referred to as viscoelasticity. That is, when a polymer is shear-stressed, it does not deform in proportion to shear stress, and has properties of changing viscosity depending on the shear stress. The properties are understood to be due to the huge molecular size and the complex intermolecular structure of the polymer.

In particular, when a molded article is manufactured using a polymer, a shear thinning phenomenon is considered as being important. A shear thinning phenomenon refers to a phenomenon in which the viscosity of a polymer decreases as a shear rate increases, and the shear thinning properties have a great influence on a molding method of a polymer.

As the shear thinning index is larger, a complex viscosity is higher at a low frequency and a complex viscosity is lower at a high frequency, and thus, the physical properties and the processability of a polymer may be excellent.

In a specific example of the present invention, the olefin-based polymer has an extrusion load (torque) of 270 Nm or less at an extrusion amount of 5.8 to 5.9 kg/hr. Preferably, the extrusion load of the olefin-based polymer is 260 Nm or less or 200 to 255 Nm at an extrusion amount of 5.8 to 5.9 kg/hr.

In a specific example of the present invention, a film prepared from the olefin-based polymer has a drop impact strength of 700 g or more based on a thickness of 50 um. Preferably, the film prepared from the olefin-based polymer may have a drop impact strength of 700 to 2,000 g based on a thickness of 50 μm.

It is understood that since the olefin-based polymer according to an embodiment of the present invention has a relatively large molecular weight distribution and there are more short chain branches in a high molecular weight component, the mechanical strength, in particular, the drop impact strength of the olefin-based polymer film prepared therefrom are excellent.

In a specific example of the present invention, the olefin-based polymer film may be effectively used as a stretch film, an overlap film, a laminated film, a silage wrap, an agricultural film, and the like.

In the specific example of the present invention, a method for molding a film from the olefin-based polymer according to an embodiment of the present invention is not particularly limited, and may use a molding method known in the art to which the present invention belongs. For example, the olefin-based polymer described above may be processed by a common method such as blown film molding, extrusion molding, or casting molding, thereby preparing an olefin-based polymer film. Among them, blown film molding is most preferred.

In a specific example of the present invention, the olefin-based polymer may be prepared by polymerizing an olefin-based monomer in the presence of a hybrid catalyst including: at least one first transition metal compound represented by the following Chemical Formula 1; and at least one second transition metal compound selected from a compound represented by the following Chemical Formula 2 and a compound represented by the following Chemical Formula 3:

[Chemical Formula 1]

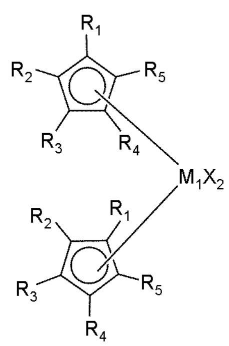

[Chemical Formula 2]

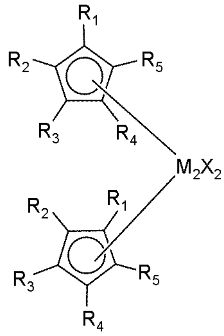

[Chemical Formula 3]

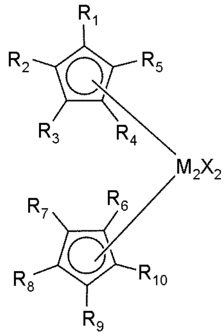

wherein $M_1$ and $M_2$ are different from each other and independently of each other titanium (Ti), zirconium (Zr), or hafnium (Hf). Specifically, $M_1$ and $M_2$ may be different from each other and be zirconium or hafnium, respectively. Preferably, $M_1$ may be hafnium and $M_2$ may be zirconium.

X is independently of each other halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, $C_{1-20}$ alkylamido, or $C_{6-20}$ arylamido. Specifically, X may be halogen or $C_{1-20}$ alkyl, respectively. Preferably, X may be chlorine or methyl.

$R_1$ to $R_{10}$ are independently of one another hydrogen, substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, substituted or unsubstituted $C_{1-20}$ alkylidene, or substituted or unsubstituted $C_{1-20}$ silyl, provided that $R_1$ to $R_{10}$ may be independently of each other connected to an adjacent group to form a substituted or unsubstituted saturated or unsaturated $C_{4-20}$ ring. Specifically, $R_1$ to $R_{10}$ may be hydrogen, substituted or unsubstituted $C_{1-20}$ alkyl, substituted or unsubstituted $C_{1-20}$ alkenyl, or substituted or unsubstituted $C_{6-20}$ aryl, respectively.

In a specific example of the present invention, $M_1$ and $M_2$ may be different from each other and be zirconium or hafnium, respectively, X may be halogen or $C_{1-20}$ alkyl, respectively, and $R_1$ to $R_{10}$ may be hydrogen, substituted or unsubstituted $C_{1-20}$ alkyl, substituted or unsubstituted $C_{1-20}$ alkenyl, or substituted or unsubstituted $C_{6-20}$ aryl, respectively.

In a preferred specific example of the present invention, $M_1$ may be hafnium, $M_2$ may be zirconium, and X may be chlorine or methyl.

In a preferred specific example of the present invention, the first transition metal compound may be at least one of transition metal compounds represented by the following Chemical Formulae 1-1 and 1-2, and the second transition metal compound may be at least one of transition metal compounds represented by the following Chemical Formulae 2-1, 2-2, and 3-1:

[Chemical Formula 1-1] [Chemical Formula 1-2]

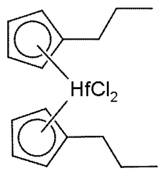

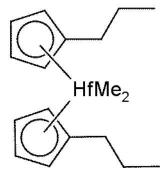

[Chemical Formula 2-1] [Chemical Formula 2-2]

[Chemical Formula 3-1]

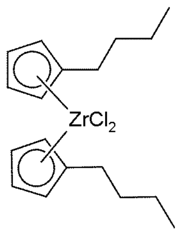

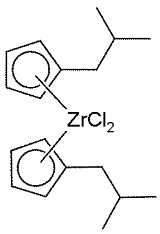

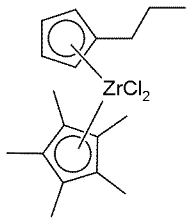

wherein Me is a methyl group.

In a specific example of the present invention, a mole ratio of the first transition metal compound to the second transition metal compound is in a range of 100:1 to 1:100. Preferably, a mole ratio of the first transition metal compound to the second transition metal compound is in a range of 50:1 to 1:50. Preferably, a mole ratio of the first transition metal compound to the second transition metal compound is in a range of 10:1 to 1:10.

In a specific example of the present invention, the catalyst may include at least one cocatalyst compound selected from the group consisting of a compound represented by the following Chemical Formula 4, a compound represented by the following Chemical Formula 5, and a compound represented by Chemical Formula 6:

[Chemical Formula 4]

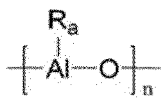

wherein n is an integer of 2 or more, $R_a$ is a halogen atom, $C_{1-20}$ hydrocarbon, or $C_{1-20}$ hydrocarbon substituted with halogen. Specifically, $R_a$ may be methyl, ethyl, n-butyl, or isobutyl.

[Chemical Formula 5]

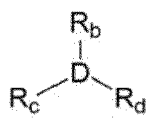

wherein D is aluminum (Al) or boron (B), and $R_b$, $R_c$, and $R_d$ are independently of one another a halogen atom, a $C_{1-20}$ hydrocarbon group, a $C_{1-20}$ hydrocarbon group substituted with halogen, or a $C_{1-20}$ alkoxy group. Specifically, when D is aluminum (Al), $R_b$, $R_c$, and $R_d$ may be independently of one another methyl or isobutyl, and when D is boron (B), $R_b$, $R_c$, and $R_d$ may be pentafluorophenyl, respectively.

[Chemical Formula 6] $[L-H]^+[Z(A)_4]^-$ or $[L]^+[Z(A)_4]^-$

L is a neutral or cationic Lewis base, $[L-H]^+$ and $[L]^+$ are a Bronsted acid, Z is a group 13 element, and A is independently of each other a substituted or unsubstituted $C_{6-20}$ aryl group or a substituted or unsubstituted $C_{1-20}$ alkyl group. Specifically, $[L-H]^+$ may be a dimethylanilinium cation, $[Z(A)_4]^-$ may be $[B(C_6F_5)_4]^-$, and $[L]^+$ may be $[(C_6H_5)_3C]^+$.

Specifically, an example of the compound represented by Chemical Formula 4 includes methylaluminoxane, ethylaluminoxane, isobutylaluminoxane, butylaluminoxane, and the like, and is preferably methylaluminoxane, but is not limited thereto.

An example of the compound represented by Chemical Formula 5 includes trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, tributylboron, and the like, and is preferably trimethylaluminum, triethylaluminum, and triisobutylaluminum, but is not limited thereto.

An example of the compound represented by Chemical Formula 6 includes triethylammoniumtetraphenylboron, tributylammoniumtetraphenylboron, trimethylammoniumtetraphenylboron, tripropylammoniumtetraphenylboron, trimethylammoniumtetra(p-tolyl)boron, trimethylammoniumtetra(o,p-dimethylphenyl)boron, tributylammoniumtetra(p-trifluoromethylphenyl)boron, trimethylammoniumtetra(p-trifluoromethylphenyl)boron, tributylammoniumtetrapentafluorophenylboron, N,N-diethylaniliniumtetraphenylboron, N,N-diethylaniliniumtetrapentafluorophenylboron, diethylammoniumtetrapentafluorophenylboron, triphenylphosphoniumtetraphenylboron, trimethylphosphoniumtetraphenylboron, triethylammoniumtetraphenylaluminum, tributylammoniumtetraphenylaluminum, trimethylammoniumtetraphenylaluminum, tripropylammoniumtetraphenylaluminum, trimethylammoniumtetra(p-tolyl) aluminum, tripropylammoniumtetra(p-tolyl)aluminum, triethylammoniumtetra(o,p-dimethylphenyl) aluminum, tributylammoniumtetra(p-trifluoromethylphenyl) aluminum, trimethylammoniumtetra(p-trifluoromethylphenyl) aluminum, tributylammoniumtetrapentafluorophenylaluminum, N,N-diethylaniliniumtetraphenylaluminum, N,N-diethylaniliniumtetrapentafluorophenylaluminum, diethylammoniumtetrapentatetraphenylaluminum, triphenylphosphoniumtetraphenylaluminum, trimethylphosphoniumtetraphenylaluminum, tripropylammoniumtetra(p-tolyl)boron, triethylammoniumtetra(o,p-dimethylphenyl)boron, tributylammoniumtetra(p-trifluoromethylphenyl)boron, triphenylcarboniumtetra(p-trifluoromethylphenyl)boron, triphenylcarboniumtetrapentafluorophenylboron, and the like.

In a specific example of the present invention, the catalyst may further include a carrier which supports a transition metal compound, a cocatalyst compound, or both of them. Specifically, the carrier may support both the transition metal compound and the cocatalyst compound.

Here, the carrier may include a material containing a hydroxyl group on the surface, and preferably, may use a material having highly reactive hydroxyl group and siloxane group which is dried to remove moisture from the surface. For example, the carrier may include at least one selected from the group consisting of silica, alumina, and magnesia. Specifically, silica, silica-alumina, silica-magnesia, and the like which are dried at a high temperature may be used as the carrier, and these may usually contain oxide, carbonate, sulfate, and nitrate components such as $Na_2O$, $K_2CO_3$, $BaSO_4$, and $Mg(NO_3)_2$. In addition, these may include carbon, zeolite, magnesium chloride, and the like. However, the carrier is not limited thereto, and is not particularly limited as long as it may support a transition metal compound and a cocatalyst compound.

The carrier may have an average particle size of 10 to 250 um, preferably 10 to 150 $\mu$m, and more preferably 20 to 100 $\mu$m.

The carrier may have a micropore volume of 0.1 to 10 cc/g, preferably 0.5 to 5 cc/g, and more preferably 1.0 to 3.0 cc/g.

The carrier may have a specific surface area of 1 to 1,000 $m^2$/g, preferably 100 to 800 $m^2$/g, and more preferably 200 to 600 $m^2$/g.

In a preferred specific example of the present invention, the carrier may be silica. Here, a drying temperature of the silica may be 200 to 900°C. The drying temperature may be 300 to 800°C, and more preferably 400 to 700°C. When the drying temperature is lower than 200°C, silica has too much moisture so that the moisture on the surface reacts with the cocatalyst compound, and when the drying temperature is higher than 900°C, the structure of the carrier may collapse.

A concentration of a hydroxyl group in dried silica may be 0.1 to 5 mmol/g, preferably 0.7 to 4 mmol/g, and more preferably 1.0 to 2 mmol/g. When the concentration of the hydroxyl group is less than 0.1 mmol/g, the supported amount of a first cocatalyst compound is lowered, and when the concentration is more than 5 mmol/g, the catalyst component becomes inactive.

The total amount of the transition metal compound supported on the carrier may be 0.001 to 1 mmol based on 1 g of the carrier. When a ratio between the transition metal compound and the carrier satisfies the above range, appropriate supported catalyst activity is shown, which is advantageous in terms of the activity maintenance of a catalyst and economic feasibility.

The total amount of the cocatalyst compound supported on the carrier may be 2 to 15 mmol based on 1 g of

the carrier. When the ratio of the cocatalyst compound and the carrier satisfies the above range, it is advantageous in terms of the activity maintenance of a catalyst and economic feasibility.

The carrier may be one or two or more. For example, both the transition metal compound and the cocatalyst compound may be supported on one carrier, and each of the transition metal compound and the cocatalyst compound may be supported on two or more carriers. In addition, only one of the transition metal compound and the cocatalyst compound may be supported on the carrier.

As a method for supporting the transition metal compound and/or the cocatalyst compound which may be used in the catalyst for olefin polymerization, a physical adsorption method or a chemical adsorption method may be used.

For example, the physical adsorption method may be a method of bringing a solution in which a transition metal compound is dissolved into contact with a carrier and then drying, a method of bringing a solution in which a transition metal compound and a cocatalyst compound are dissolved into contact with a carrier and then drying, a method of bringing a solution in which a transition metal compound is dissolved into contact with a carrier and then drying to prepare a carrier on which the transition metal compound is supported, separately bringing a solution in which a cocatalyst compound is dissolved into contact with a carrier and then drying to prepare a carrier on which the cocatalyst compound is supported, and then mixing them, or the like.

The chemical adsorption method may be a method of first supporting a cocatalyst compound on the surface of a carrier and then supporting a transition metal compound on the cocatalyst compound, a method of binding a functional group (for example, a hydroxyl group (-OH) on the surface of silica, in the case of silica) on the surface of a carrier and a catalyst compound covalently.

In a specific example of the present invention, the olefin-based polymer may be a homopolymer of an olefin-based monomer or a copolymer of olefin-based monomer and comonomer. Preferably, the olefin-based polymer is a copolymer of an olefin-based monomer and an olefin-based comonomer.

Herein, the olefin-based monomer may be at least one selected from the group consisting of $C_{2-20}$ $\alpha$-olefin, $C_{1-20}$ diolefin, $C_{3-20}$ cycloolefin, and $C_{3-20}$ cyclodiolefin.

For example, the olefin-based monomer may be ethylene, propylene, 1-butene, 1-pentene, 4-methyl-1-pentene, 1-hexene, 1-heptene, 1-octene, 1-decene, 1-undecene, 1-dodecene, 1-tetradecene, or 1-hexadecene, and the olefin-based polymer may be a homopolymer including only one or a copolymer including two or more of the olefin-based monomers exemplified above.

In an exemplary embodiment, the olefin-based polymer may be a copolymer of ethylene and $C_{3-20}$ $\alpha$-olefin. Preferably, the olefin-based polymer may be a linear low-density polyethylene in which the olefin-based monomer is ethylene and the olefin-based comonomer is 1-hexene.

In this case, the content of ethylene is preferably 55 to 99.9 wt%, and more preferably 90 to 99.9 wt%. The content of the $\alpha$-olefin-based comonomer is preferably 0.1 to 45 wt%, and more preferably 0.1 to 10 wt%.

**Method for preparing olefin-based polymer**

According to an embodiment of the present invention, a method for preparing an olefin-based polymer including: obtaining an olefin-based polymer by polymerizing an olefin-based monomer in the presence of a hybrid catalyst including: at least one first transition compound represented by the following Chemical Formula 1; and at least one second transition metal compound selected from a compound represented by the following Chemical Formula 2 and a compound represented by the following Chemical Formula 3, is provided:

[Chemical Formula 1]

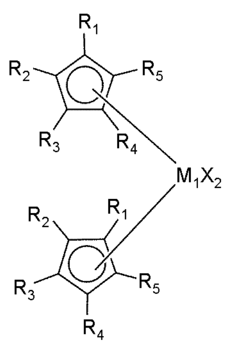

[Chemical Formula 2]

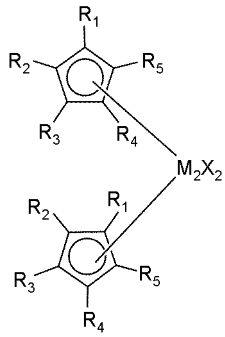

[Chemical Formula 3]

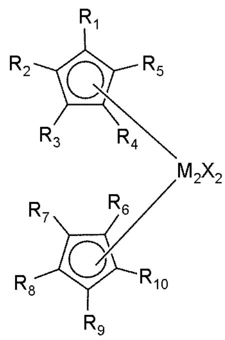

wherein $M_1$, $M_2$, X, and $R_1$ to $R_{10}$ are as defined above in the item of "olefin-based polymer".

As described above, the olefin-based polymer prepared by the preparation method according to an exemplary embodiment of the present invention is an olefin-based polymer having (1) a density of 0.9 to 0.95 g/cm$^3$; (2) a melt index ($I_{2.16}$) of 0.1 to 5.0 g/10 min as measured with a load of 2.16 kg at 190°C; (3) a ratio between a melt index ($I_{21.6}$) measured with a load of 21.6 kg and a melt index ($I_{2.16}$) measured with a load of 2.16 kg at 190°C (melt flow ratio; MFR) of 20 or more; (4) a shear thinning index defined by the following Equation 1 of 8 to 15; and (5) an extrusion load (torque) of 270 Nm or less at an extrusion amount of 5.8 to 5.9 kg/hr, wherein a film prepared therefrom has a drop impact strength (type B) of 700 g or more based on a thickness of 50 $\mu$m.

[Equation 1]

$$\text{Shear thinning index} = \eta_0/\eta_{500}$$

wherein $\eta_0$ and $\eta_{500}$ are complex viscosities at 0.1 rad/s and 500 rad/s.

In a specific example of the present invention, the olefin-based polymer may have (1) the density of 0.915 to 0.945 g/cm$^3$; (2) the melt index ($I_{2.16}$) of 0.1 to 5.0 g/10 min as measured with a load of 2.16 kg at 190°C; (3) the ratio between a melt index ($I_{21.6}$) measured with a load of 21.6 kg and a melt index ($I_{2.16}$) measured with a load of 2.16 kg at 190°C (melt flow ratio; MFR) of 20 or more; (4) the shear thinning index defined by Equation 1 of 9 to 15; and (5) the extrusion load (torque) of 260 Nm or less at an extrusion amount of 5.8 to 5.9 kg/hr, wherein a film prepared therefrom has a drop impact strength (type B) of 700 g or more, based on a thickness of 50 $\mu$m.

In a preferred specific example of the present invention, the olefin-based polymer may have (1) the density of 0.915 to 0.942 g/cm$^3$; (2) the melt index ($I_{2.16}$) of 0.5 to 3.5 g/10 min as measured with a load of 2.16 kg at 190°C; (3) the MFR of 20 to 50; (4) the shear thinning index defined by Equation 1 of 9 to 12; and (5) the extrusion load of 200 to 255 Nm at an extrusion amount of 5.8 to 5.9 kg/hr.

In a specific example of the present invention, the olefin-based polymer may be polymerized by a polymerization reaction such as free radical, cationic, coordination, condensation, and addition polymerization, but is not limited thereto.

In an exemplary embodiment of the present invention, the olefin-based polymer may be prepared by a gas phase polymerization method, a solution polymerization method, a slurry polymerization method, or the like. Preferably, the polymerization of the olefin-based monomer may be performed by gas phase polymerization, specifically, the polymerization of the olefin-based monomer may be performed in a gas phase fluidized bed reactor.

When the olefin-based polymer is prepared by a solution polymerization method or a slurry polymerization method, an example of the solvent to be used may include a $C_{5-12}$ aliphatic hydrocarbon solvent such as pentane, hexane, heptane, nonane, decane, and isomers thereof; an aromatic hydrocarbon solvent such as toluene and benzene; a hydrocarbon solvent substituted with a chlorine atom such as dichloromethane and chlorobenzene; and a mixture thereof, but is not limited thereto.

[Best Mode for Carrying Out the Invention]

**Examples**

Hereinafter, the present disclosure will be specifically described through the following examples. However, the following examples are only illustrative of the present invention, and do not limit the scope of the present invention.

**Preparation Example**

The transition metal compound of Chemical Formula 1-1 (bis(n-propylcyclopentadienyl) hafnium dichloride) and the transition metal compound of Chemical Formula 2-1 (bis(n-butylcyclopentadienyl) zirconium dichloride) were purchased from TCI, and used without further purification.

892 g of a 10% toluene solution of methylaluminoxane was added to 4.47 g of the transition metal compound of Chemical Formula 1-1 and 1.67 g of the transition metal compound of Chemical Formula 2-1, and the solution was stirred at room temperature for 1 hour. The solution after the reaction was added to 200 g of silica (XPO-2402), 1.5 L of toluene was further added, and stirring was performed at 70°C for 2 hours. The supported catalyst was washed with 500 mL of toluene, and was dried overnight at 60°C under vacuum to obtain 280 g of a supported catalyst in powder form.

Examples 1-2

Ethylene/1-hexene copolymers were prepared in the presence of the supported catalysts, which were obtained in Preparation Example 1, using a gas phase fluidized bed reactor. The ethylene partial pressure of the reactor was maintained at about 15 kg/cm$^2$, and the polymerization temperature was maintained at 70-90°C.

The polymerization conditions of the examples are shown in the following Table 1.

[Table 1]

| | Example 1 | Example 2 |
|---|---|---|
| Polymerization temperature (°C) | 75.4 | 80.9 |
| Catalyst injection amount (g/h) | 2.0 | 1.4 |
| Hydrogen injection amount (g/h) | 2.22 | 2.34 |
| 1-Hexene injection amount (kg/h) | 1.60 | 1.63 |
| Hydrogen/ethylene concentration (%) ratio | 0.047 | 0.048 |
| 1-Hexene/ethylene concentration (%) ratio | 2.096 | 1.993 |

Comparative Example 1

For comparison, a linear low-density polyethylene M1810HA (density: 0.9200 g/cm$^3$, melt index: 1.0 g/10 min) available from Hanwha Solutions was used.

**Test Example**

The physical properties of the olefin-based polymer of the above examples were measured by the following methods and criteria. The results are shown in Table 2.

(1) Density

Density was measured according to ASTM D 1505.

(2) Melt index and melt index ratio (MFR)

The melt index was measured with a load of 21.6 kg and a load of 2.16 kg, respectively, at 190°C in accordance with ASTM D 1238, and the ratio ($MI_{21.6}/MI_{2.16}$) was calculated.

(3) Rheological properties

A complex viscosity depending on a frequency was measured under a frequency range of 0.1 to 500 rad/s and a strain of 5%, using MCR702 available from Anton Parr.

(4) Extrusion load

An extrusion load depending on an extrusion amount was measured under a screw rpm of 20 to 80 and an extrusion amount of 1.4 to 5.8 kg/hr at 190°C, using Gottfert available from Collin.

In addition, each resin of the examples and the comparative examples was prepared into a film having a thickness of 50 um, through a 40 mm blown film extruder (40 mm Φ screw, 75 mm Φ die, 2 mm die gap). At this time, the extrusion conditions were set to C1/C2/C3/A/D1/D2=160/165/170/175/180/180°C, a screw speed of 80 rpm, and a blow-up ratio (BUR) of 2. The physical properties of the prepared films were measured by the following methods and criteria. The results are shown in the following Table 2.

(5) Drop impact strength

Drop impact strength was measured in accordance with ASTM D1709 type B.

[Table 2]

| | Unit | Example 1 | Example 2 | Comparative Example 1 |
|---|---|---|---|---|
| Density | $g/cm^3$ | 0.9180 | 0.9205 | 0.9198 |
| MI ($I_{2.16}$) | g/10 min | 0.98 | 1.06 | 1.01 |
| MFI ($I_{21.6}$) | g/10 min | 26.0 | 24.9 | 16.6 |
| MFR | - | 26.5 | 23.5 | 16.4 |
| Shear thinning index | - | 10.5 | 9.1 | 7.3 |
| Extrusion load (Nm, 5.8-5.9 kg/hr) | - | 232.4 | 254.9 | 278.3 |
| Drop impact strength | g | 1,560 | 770 | 670 |

The olefin-based polymer according to the specific example of the present invention has excellent processability, and the olefin-based polymer film prepared therefrom, specifically a linear low-density polyethylene film has excellent mechanical strength, in particular, excellent drop impact strength.

[Industrial Applicability]

Therefore, the present invention may provide an olefin-based polymer having excellent processability and a film which is prepared therefrom and has excellent mechanical strength, in particular, excellent drop impact strength.

## Claims

1. An olefin-based polymer which has (1) a density of 0.9 to 0.95 $g/cm^3$; (2) a melt index ($I_{2.16}$) of 0.1 to 5.0 g/10 min as measured with a load of 2.16 kg at 190°C; (3) a ratio between a melt index ($I_{21.6}$) measured with a load of 21.6 kg and a melt index ($I_{2.16}$) measured with a load of 2.16 kg at 190°C (melt flow ratio; MFR) of 20 or more; (4) a shear thinning index defined by the following Equation 1 of 8 to 15; and (5) an extrusion load (torque) of 270 Nm or less

at an extrusion amount of 5.8 to 5.9 kg/hr, wherein a film prepared therefrom has a drop impact strength (type B) of 700 g or more, based on a thickness of 50 μm:

[Equation 1]

$$\text{Shear thinning index} = \eta_0/\eta_{500}$$

wherein $\eta_0$ and $\eta_{500}$ are complex viscosities at frequencies of 0.1 rad/s and 500 rad/s.

**2.** The olefin-based polymer of claim 1, wherein the olefin-based polymer has (1) the density of 0.915 to 0.945 g/cm$^3$; (2) the melt index ($I_{2.16}$) of 0.1 to 5.0 g/10 min as measured with a load of 2.16 kg at 190°C; (3) the ratio between a melt index ($I_{21.6}$) measured with a load of 21.6 kg and a melt index ($I_{2.16}$) measured with a load of 2.16 kg at 190°C (melt flow ratio; MFR) of 20 or more; (4) the shear thinning index defined by Equation 1 of 9 to 15; and (5) the extrusion load (torque) of 260 Nm or less at an extrusion amount of 5.8 to 5.9 kg/hr.

**3.** The olefin-based polymer of claim 1, wherein the olefin-based polymer is prepared by polymerizing an olefin-based monomer in the presence of a hybrid catalyst including: at least one first transition meatal compound represented by the following Chemical Formula 1; and at least one second transition metal compound selected from a compound represented by the following Chemical Formula 2 and a compound represented by the following Chemical Formula 3:

[Chemical Formula 1]

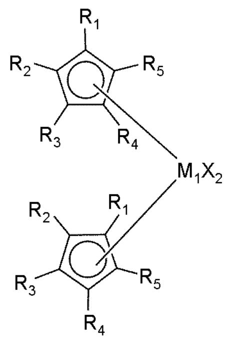

[Chemical Formula 2]

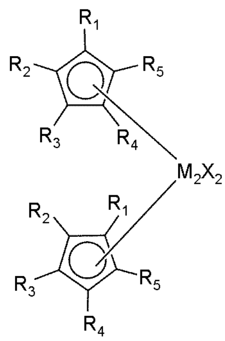

[Chemical Formula 3]

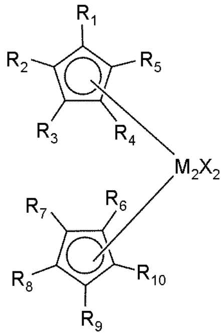

wherein $M_1$ and $M_2$ are different from each other and independently of each other titanium (Ti), zirconium (Zr), or hafnium (Hf),

X is independently of each other halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, $C_{1-20}$ alkylamido, or $C_{6-20}$ arylamido and

$R_1$ to $R_{10}$ are independently of one another hydrogen, substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, substituted or unsubstituted $C_{1-20}$ alkylidene, or substituted or unsubstituted $C_{1-20}$ silyl, provided that $R_1$ to $R_{10}$ may be independently of each other connected to an adjacent group to form a substituted or unsubstituted saturated or unsaturated $C_{4-20}$ ring.

**4.** The olefin-based polymer of claim 3, wherein $M_1$ and $M_2$ are different from each other and are zirconium or hafnium, respectively, X is halogen or $C_{1-20}$ alkyl, respectively, and $R_1$ to $R_{10}$ are hydrogen, substituted or unsubstituted $C_{1-20}$ alkyl, substituted or unsubstituted $C_{1-20}$ alkenyl, or substituted or unsubstituted $C_{6-20}$ aryl, respectively.

**5.** The olefin-based polymer of claim 4, wherein $M_1$ is hafnium, $M_2$ is zirconium, and X is chlorine or methyl.

**6.** The olefin-based polymer of claim 3, wherein the first transition metal compound is at least one of transition metal compounds represented by the following Chemical Formulae 1-1 and 1-2, and the second transition metal compound is at least one of transition metal compounds represented by the following Chemical Formulae 2-1, 2-2, and 3-1:

[Chemical Formula 1-1] [Chemical Formula 1-2]

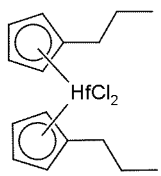

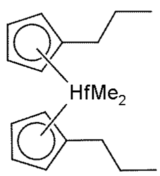

[Chemical Formula 2-1] [Chemical Formula 2-2]

[Chemical Formula 3-1]

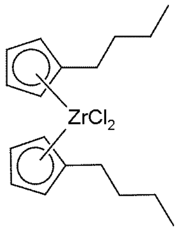
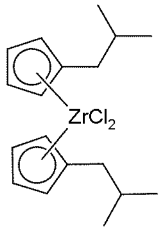
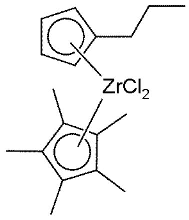

wherein Me is a methyl group.

**7.** The olefin-based polymer of claim 3, wherein a mole ratio of the first transition metal compound to the second transition metal compound is in a range of 100:1 to 1:100.

**8.** The olefin-based polymer of claim 3, wherein the catalyst includes at least one cocatalyst compound selected from the group consisting of a compound represented by the following Chemical Formula 4, a compound represented by the following Chemical Formula 5, and a compound represented by the following Chemical Formula 6:

[Chemical Formula 4]

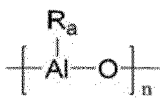

[Chemical Formula 5]

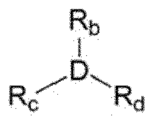

[Chemical Formula 6] $[L-H]^+[Z(A)_4]^-$ or $[L]^+[Z(A)_4]^-$

wherein n is an integer of 2 or more, $R_a$ is a halogen atom, a $C_{1-20}$ hydrocarbon group, or a $C_{1-20}$ hydrocarbon group substituted with halogen,
D is aluminum (Al) or boron (B), and $R_b$, $R_c$, and $R_d$ are independently of one another a halogen atom, a $C_{1-20}$ hydrocarbon group, a $C_{1-20}$ hydrocarbon group substituted with halogen, or a $C_{1-20}$ alkoxy group, and
L is a neutral or cationic Lewis base, $[L-H]^+$ and $[L]^+$ are a Bronsted acid, Z is a group 13 element, and A is independently of each other a substituted or unsubstituted $C_{6-20}$ aryl group or a substituted or unsubstituted $C_{1-20}$ alkyl group.

**9.** The olefin-based polymer of claim 8, wherein the catalyst further includes a carrier which supports the transition metal compound, the cocatalyst compound, or both of them.

**10.** The olefin-based polymer of claim 9, wherein the carrier includes at least one selected from the group consisting of silica, alumina, and magnesia.

**11.** The olefin-based polymer of claim 9, wherein a total amount of the hybrid transition metal compound supported on the carrier is 0.001 to 1 mmole based on 1 g of the carrier, and a total amount of the cocatalyst compound supported on the carrier is 2 to 15 mmole based on 1 g of the carrier.

**12.** The olefin-based polymer of claim 1, wherein the olefin-based polymer is a copolymer of the olefin-based monomer and an olefin-based comonomer.

**13.** The olefin-based polymer of claim 12, wherein the olefin-based monomer is ethylene, and the olefin-based comonomer is one or more selected from the group consisting of propylene, 1-butene, 1-pentene, 4-methyl-1-pentene, 1-hexene, 1-heptene, 1-octene, 1-decene, 1-undecene, 1-dodecene, 1-tetradecene, and 1-hexadecene.

**14.** The olefin-based polymer of claim 13, wherein the olefin-based polymer is a linear low-density polyethylene in which the olefin-based monomer is ethylene and the olefin-based comonomer is 1-hexene.

**15.** A method for preparing an olefin-based polymer, the method comprising: polymerizing an olefin-based monomer in the presence of a hybrid catalyst including at least one first transition metal compound represented by the following Chemical Formula 1; and at least one second transition metal compound selected from a compound represented by the following Chemical Formula 2 and a compound represented by the following Chemical Formula 3, thereby obtaining an olefin-based polymer, wherein the olefin-based polymer has (1) a density of 0.9 to 0.95 g/cm$^3$; (2) a melt index ($I_{2.16}$) of 0.1 to 5.0 g/10 min as measured with a load of 2.16 kg at 190°C; (3) a ratio between a melt index ($I_{21.6}$) measured with a load of 21.6 kg and a melt index ($I_{2.16}$) measured with a load of 2.16 kg at 190°C (melt flow ratio; MFR) of 20 or more; (4) a shear thinning index defined by the following Equation 1 of 8 to 15; and (5) an extrusion load (torque) of 270 Nm or less at an extrusion amount of 5.8 to 5.9 kg/hr, wherein a film prepared therefrom has a drop impact strength (type B) of 700 g or more based on a thickness of 50 μm:

[Chemical Formula 1]

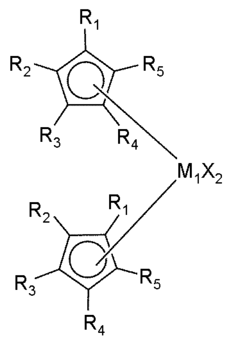

[Chemical Formula 2]

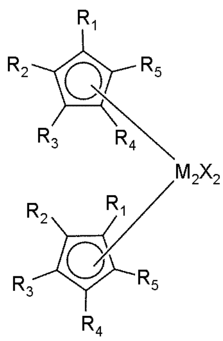

[Chemical Formula 3]

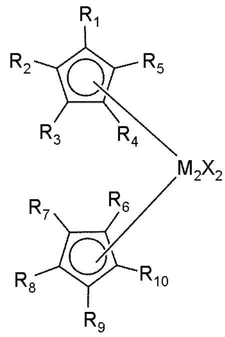

[Equation 1]

$$\text{Shear thinning index} = \eta_0/\eta_{500}$$

wherein $\eta_0$ and $\eta_{500}$ are complex viscosities at frequencies of 0.1 rad/s and 500 rad/s, and $M_1$, $M_2$, X, and $R_1$ to $R_{10}$ are as defined in claim 3.

**16.** The method for preparing an olefin-based monomer of claim 15, wherein the polymerization of the olefin-based monomer is performed by gas phase polymerization.

[FIG. 1]

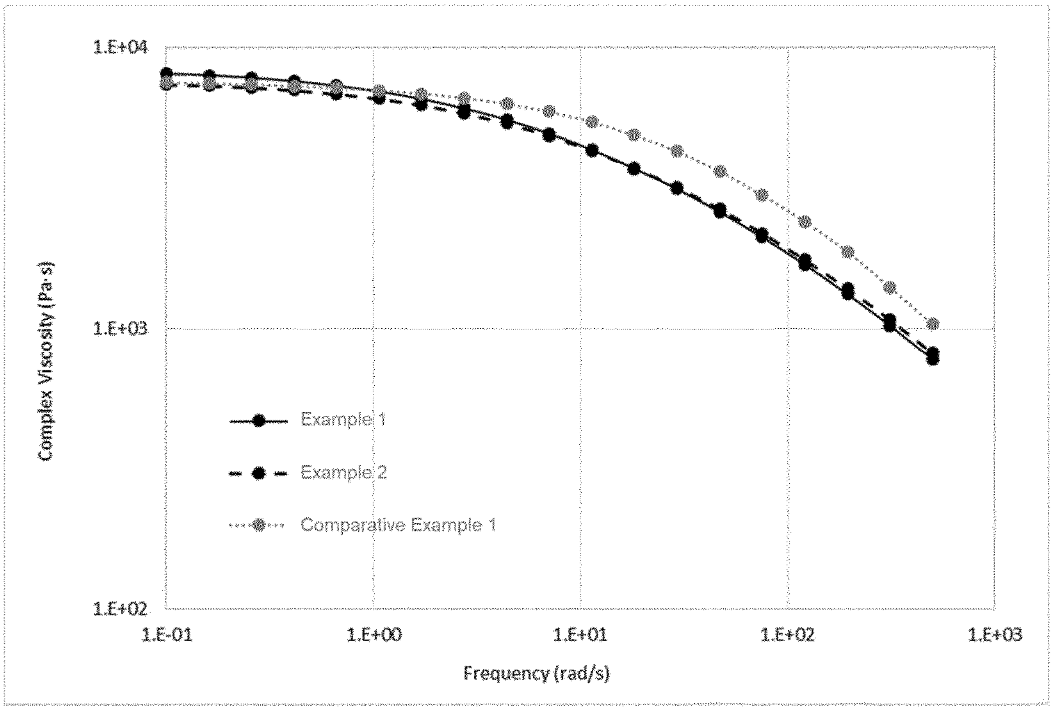
1.E+04
1.E+03
1.E+02
Complex Viscosity (Pa·s)
Example 1
Example 2
Comparative Example 1
1.E-01
1.E+00
1.E+01
1.E+02
1.E+03
Frequency (rad/s)

[FIG. 2]

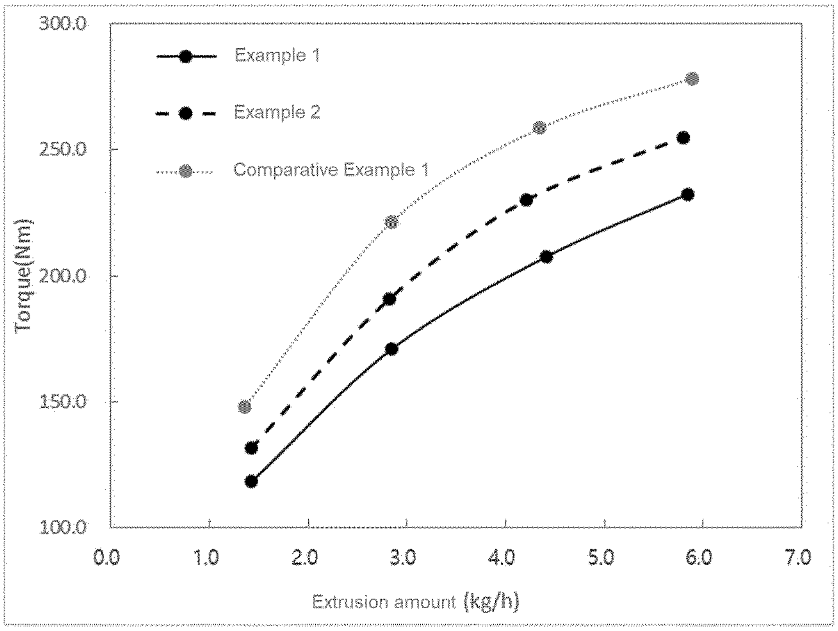
300.0
250.0
200.0
150.0
100.0
Torque(Nm)
Example 1
Example 2
Comparative Example 1
0.0
1.0
2.0
3.0
4.0
5.0
6.0
7.0
Extrusion amount (kg/h)

## INTERNATIONAL SEARCH REPORT

International application No.
**PCT/KR2021/018076**

### A. CLASSIFICATION OF SUBJECT MATTER

**C08F 210/16**(2006.01)i; **C08F 210/14**(2006.01)i; **C08F 2/34**(2006.01)i; **C08F 4/659**(2006.01)i; **C08F 4/6592**(2006.01)i; **C08F 4/02**(2006.01)i

According to International Patent Classification (IPC) or to both national classification and IPC

### B. FIELDS SEARCHED

Minimum documentation searched (classification system followed by classification symbols)

C08F 210/16(2006.01); C07F 17/00(2006.01); C07F 7/00(2006.01); C08F 10/02(2006.01); C08F 110/02(2006.01); C08F 210/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 밀도(density), 용융지수(MI, melt-index), 혼성촉매(hybride catalyst), 메탈로센(metallocene), 하프늄(hafnium, Hf), 지르코늄(zirconium, Zr), 올레핀(olefin)

### C. DOCUMENTS CONSIDERED TO BE RELEVANT

| Category* | Citation of document, with indication, where appropriate, of the relevant passages | Relevant to claim No. |
|---|---|---|
| X | US 2005-0159300 A1 (JENSEN, M. D. et al.) 21 July 2005 (2005-07-21) See claims 1-18, 32, 34 and 36-38; and paragraphs [0154], [0266]-[0269], [0274], [0376], [0377], [0387] and [0388]. | 1-16 |
| A | JP 2015-113282 A (KOEI CHEM. CO., LTD.) 22 June 2015 (2015-06-22) See paragraphs [0002] and [0042]. | 1-16 |
| A | WO 2019-027585 A1 (EXXONMOBIL CHEMICAL PATENTS INC.) 07 February 2019 (2019-02-07) See claims 1-28. | 1-16 |
| A | US 2002-0119890 A1 (WENZEL, T. T et al.) 29 August 2002 (2002-08-29) See claims 1-35. | 1-16 |
| A | US 2016-0362510 A1 (UNIVATION TECHNOLOGIES, LLC) 15 December 2016 (2016-12-15) See claims 17, 20, 21, 23, 25-27, 30 and 32; and paragraphs [0200]-[0214]. | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 March 2022** | **28 March 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

**INTERNATIONAL SEARCH REPORT**
**Information on patent family members**

International application No.
**PCT/KR2021/018076**

| Patent document cited in search report | Publication date (day/month/year) | Patent family member(s) | Publication date (day/month/year) |
|---|---|---|---|
| US 2005-0159300 A1 | 21 July 2005 | AU 2005-206563 A1 | 04 August 2005 |
| | | AU 2005-206563 B2 | 16 December 2010 |
| | | AU 2010-246340 A1 | 09 December 2010 |
| | | AU 2010-246340 B2 | 26 July 2012 |
| | | CN 101475654 A | 08 July 2009 |
| | | CN 101475654 B | 02 January 2013 |
| | | CN 1930196 A | 14 March 2007 |
| | | EP 1706437 A1 | 04 October 2006 |
| | | EP 1706437 B1 | 20 January 2016 |
| | | JP 2007-518871 A | 12 July 2007 |
| | | JP 2011-140658 A | 21 July 2011 |
| | | JP 2014-210937 A | 13 November 2014 |
| | | JP 5623315 B2 | 12 November 2014 |
| | | JP 5952870 B2 | 13 July 2016 |
| | | US 2006-0229420 A1 | 12 October 2006 |
| | | US 7119153 B2 | 10 October 2006 |
| | | US 7572875 B2 | 11 August 2009 |
| | | WO 2005-070977 A1 | 04 August 2005 |
| JP 2015-113282 A | 22 June 2015 | None | |
| WO 2019-027585 A1 | 07 February 2019 | CN 111094366 A | 01 May 2020 |
| | | CN 111108130 A | 05 May 2020 |
| | | CN 111212857 A | 29 May 2020 |
| | | CN 111491959 A | 04 August 2020 |
| | | EP 3661975 A1 | 10 June 2020 |
| | | EP 3661981 A1 | 10 June 2020 |
| | | EP 3661984 A1 | 10 June 2020 |
| | | EP 3661984 B1 | 19 January 2022 |
| | | EP 3697822 A1 | 26 August 2020 |
| | | US 10844150 B2 | 24 November 2020 |
| | | US 10913808 B2 | 09 February 2021 |
| | | US 2019-0040167 A1 | 07 February 2019 |
| | | US 2019-0040168 A1 | 07 February 2019 |
| | | US 2020-0165366 A1 | 28 May 2020 |
| | | US 2020-0231790 A1 | 23 July 2020 |
| | | WO 2019-027586 A1 | 07 February 2019 |
| | | WO 2019-027587 A1 | 07 February 2019 |
| | | WO 2019-027605 A1 | 07 February 2019 |
| US 2002-0119890 A1 | 29 August 2002 | US 2004-0039138 A1 | 26 February 2004 |
| | | US 2005-0256280 A1 | 17 November 2005 |
| | | US 6656866 B2 | 02 December 2003 |
| | | US 6982236 B2 | 03 January 2006 |
| | | US 7384884 B2 | 10 June 2008 |
| US 2016-0362510 A1 | 15 December 2016 | AU 2015-217386 A1 | 08 September 2016 |
| | | AU 2015-217386 B2 | 06 December 2018 |
| | | AU 2015-217387 A1 | 15 September 2016 |
| | | AU 2015-217387 B2 | 06 December 2018 |
| | | AU 2015-217388 A1 | 15 September 2016 |
| | | AU 2015-217388 B2 | 20 September 2018 |
| | | AU 2015-217390 A1 | 15 September 2016 |
| | | AU 2015-217390 B2 | 29 November 2018 |

Form PCT/ISA/210 (patent family annex) (July 2019)

**INTERNATIONAL SEARCH REPORT**
**Information on patent family members**

International application No.
**PCT/KR2021/018076**

| Patent document cited in search report | Publication date (day/month/year) | Patent family member(s) | Publication date (day/month/year) |
|---|---|---|---|
| | | AU 2015-217391 A1 | 15 September 2016 |
| | | AU 2015-217391 B2 | 15 November 2018 |
| | | AU 2015-217393 A1 | 20 August 2015 |
| | | AU 2015-217393 B2 | 20 December 2018 |
| | | AU 2015-217394 A1 | 20 August 2015 |
| | | AU 2015-217394 B2 | 13 December 2018 |
| | | AU 2015-217400 A1 | 20 August 2015 |
| | | AU 2015-217400 B2 | 20 December 2018 |
| | | AU 2015-217402 A1 | 20 August 2015 |
| | | AU 2015-217402 B2 | 08 November 2018 |
| | | CN 105980423 A | 28 September 2016 |
| | | CN 105980424 B | 21 May 2019 |
| | | CN 106034402 B | 31 May 2019 |
| | | CN 106062016 B | 08 October 2019 |
| | | CN 109535299 A | 29 March 2019 |
| | | CN 110330580 A | 15 October 2019 |
| | | CN 110330581 A | 15 October 2019 |
| | | CN 110330582 A | 15 October 2019 |
| | | CN 110540612 A | 06 December 2019 |
| | | EP 3105257 A2 | 21 December 2016 |
| | | EP 3105257 B1 | 21 October 2020 |
| | | EP 3105258 A1 | 21 December 2016 |
| | | EP 3105259 A2 | 21 December 2016 |
| | | EP 3105259 B1 | 11 November 2020 |
| | | EP 3105261 A1 | 21 December 2016 |
| | | EP 3105262 A1 | 21 December 2016 |
| | | EP 3105263 A1 | 21 December 2016 |
| | | EP 3105264 A1 | 21 December 2016 |
| | | EP 3105265 A1 | 21 December 2016 |
| | | EP 3105265 B1 | 02 June 2021 |
| | | EP 3105266 A1 | 21 December 2016 |
| | | EP 3105266 B1 | 25 March 2020 |
| | | EP 3660058 A1 | 03 June 2020 |
| | | EP 3663323 A1 | 10 June 2020 |
| | | EP 3677605 A1 | 08 July 2020 |
| | | EP 3778671 A1 | 17 February 2021 |
| | | EP 3805278 A1 | 14 April 2021 |
| | | JP 2017-505376 A | 16 February 2017 |
| | | JP 2017-505846 A | 23 February 2017 |
| | | JP 2017-506281 A | 02 March 2017 |
| | | JP 2017-507017 A | 16 March 2017 |
| | | JP 2017-508834 A | 30 March 2017 |
| | | JP 2019-143160 A | 29 August 2019 |
| | | JP 2019-163476 A | 26 September 2019 |
| | | JP 2020-055811 A | 09 April 2020 |
| | | JP 2020-090678 A | 11 June 2020 |
| | | JP 2020-143296 A | 10 September 2020 |
| | | JP 2021-036050 A | 04 March 2021 |
| | | JP 2021-073360 A | 13 May 2021 |
| | | JP 2021-073361 A | 13 May 2021 |

Form PCT/ISA/210 (patent family annex) (July 2019)

**INTERNATIONAL SEARCH REPORT**
**Information on patent family members**

International application No.
**PCT/KR2021/018076**

| Patent document cited in search report | Publication date (day/month/year) | Patent family member(s) | Publication date (day/month/year) |
|---|---|---|---|
| | | JP 2021-073362 A | 13 May 2021 |
| | | JP 2021-102776 A | 15 July 2021 |
| | | JP 2021-185225 A | 09 December 2021 |
| | | JP 6526030 B2 | 05 June 2019 |
| | | JP 6527165 B2 | 05 June 2019 |
| | | JP 6532881 B2 | 19 June 2019 |
| | | JP 6538703 B2 | 03 July 2019 |
| | | JP 6613240 B2 | 27 November 2019 |
| | | KR 10-2016-0121540 A | 19 October 2016 |
| | | KR 10-2016-0121543 A | 19 October 2016 |
| | | KR 10-2021-0129251 A | 27 October 2021 |
| | | KR 10-2021-0135629 A | 15 November 2021 |
| | | KR 10-2021-0137229 A | 17 November 2021 |
| | | KR 10-2021-0158429 A | 30 December 2021 |
| | | KR 10-2022-0000908 A | 04 January 2022 |
| | | KR 10-2293490 B1 | 26 August 2021 |
| | | KR 10-2321784 B1 | 05 November 2021 |
| | | KR 10-2323279 B1 | 08 November 2021 |
| | | KR 10-2324441 B1 | 11 November 2021 |
| | | KR 10-2329464 B1 | 23 November 2021 |
| | | KR 10-2329477 B1 | 24 November 2021 |
| | | KR 10-2344094 B1 | 30 December 2021 |
| | | KR 10-2354757 B1 | 08 February 2022 |
| | | KR 10-2362120 B1 | 14 February 2022 |
| | | KR 10-2362123 B1 | 14 February 2022 |
| | | US 9809667 B2 | 07 November 2017 |
| | | US 9850332 B2 | 26 December 2017 |
| | | US 9879106 B2 | 30 January 2018 |
| | | US 9902790 B2 | 27 February 2018 |

Form PCT/ISA/210 (patent family annex) (July 2019)